# EUROPÄISCHE PATENTANMELDUNG

(11) **EP 0 721 123 A1**
(43) Veröffentlichungstag der Anmeldung: **10.07.1996**
(21) Anmeldenummer: 96100020.5
(22) Anmeldetag: 02.01.1996
(51) Int. Cl.: G02B 6/44

(54) **Optisches Kabel und Verfahren zu dessen Wiederverwertung**

(30) Priorität: 05.01.1995 DE 19500467
(71) Anmelder: SIEMENS AKTIENGESELLSCHAFT, 80333 München (DE)
(72) Erfinder: Kamps, Rainer, Dr.-Dipl.-Chem., D-96271 Grub (DE); Pfandl, Walter, Dr.-Ing., D-96482 Ahorn (DE); Zapf, Frederic Dr.-Chem-, D-96465 Neustadt (DE); Schneider, Reiner, Dipl.-Ing., D-96237 Ebersdorf (DE)

(57) **Zusammenfassung**

Das optische Kabel (OC) enthält mindestens einen eine Beschichtung aufweisenden Lichtwellenleiter (LW) sowie sonstige Bestandteile in Form einer Schutzhülle (SH) aus Kunststoffmaterial sowie ggf. zugfeste Elemente (SE) und/oder eine Füllmasse (FM). Sämtliche der sonstigen Bestandteile des Kabels enthalten nur Polyolefine, ggf. Glas oder anorganische Füllstoffe, wodurch eine einfache Recyclbarkeit gewährleistet ist.

## Beschreibung

Die Erfindung betrifft ein optisches Kabel mit mindestens einem eine Beschichtung (Coating) aufweisenden Lichtwellenleiter sowie sonstigen Bestandteilen in Form einer Schutzhülle aus Kunststoffmaterial sowie ggf. zugfesten Elementen und/oder einer Füllmasse.

Bekannte optische Kabel werden in erster Linie so ausgelegt, daß sie die gewünschten mechanischen und optischen Eigenschaften einhalten. Insbesondere wird auf die Erreichung einer entsprechenden Zugfestigkeit, die Erfüllung vorgegebener Biegebeanspruchungen oder dergleichen Wert gelegt. Die verwendeten Materialien für die bekannten Kabelkonstruktionen erfüllen zwar die genannten technischen Anforderungen, sind jedoch im allgemeinen schwer oder gar nicht recyclfähig, weil die Kabel aus sehr unterschiedlichen und schwer voneinander trennbaren Materialien bestehen. Zudem werden vielfach teure Materialien und Fertigungsprozesse eingesetzt.

Der Erfindung liegt die Aufgabe zugrunde, einen Kabelaufbau zu schaffen, der eine leichte Recyclbarkeit zuläßt. Diese Aufgabe wird bei einem Kabel der eingangs genannten Art dadurch gelöst, daß sämtliche sonstigen Bestandteile des Kabels nur aus Polyolefinen und ggf. Glas und/oder anorganischen Füllstoffen bestehen.

Durch die standardisiert nur im wesentlichen auf Glas und Polyolefine zurückgreifenden Ausgangsmaterialien des erfindungsgemäßen Kabels, läßt sich dieses gut recyclen, insbesondere z.B. durch Zerkleinern z.B. Zerhäckseln in neue Gemisch - Ausgangsstoffe (Granulate) umwandeln, die ihrerseits nicht etwa getrennt oder thermisch entsorgt werden müssen, sondern zur Herstellung neuer Kunststoffteile Verwendung finden können. Hierbei wirken die beim Zerkleinern aus den Lichtwellenleitern entstehenden Glaspartikel als Verstärkungselemente, so daß solche Recyclingmaterialien vor allem dort Verwendung finden können, wo ohnehin faserförmige Verstärkungsmaterialien in eine Kunststoffmatrix eingebettet werden, z.B. für GFK-Matten und Abdeckelemente in der Automobiltechnik oder dergleichen. Etwaige Bestandteile in Form von Glas (z.B. zugfeste Glas fäden) oder anorganische Füllstoffe stören hierbei nicht.

Die sonstigen Bestandteile des Kabels (d.h. alle Elemente, ausgenommen die Lichtwellenleiter) sollten zweckmäßig über 98 Gew.%, vorzugsweise über 99,5 Gew.% des Kabels ausmachen.

Die Erfindung betrifft weiterhin ein Verfahren zur Wiederaufbereitung eines optischen Kabels nach der Erfindung, welches dadurch gekennzeichnet ist, daß das in seinen sonstigen Bestandteilen nur aus Polyolefinen und ggf. Glas und/oder anorganischen Füllstoffen bestehende Kabel durch einen Zerkleinerungsvorgang in ein Gemisch verwandelt wird und daß aus diesem Gemisch neue Kunststofformkörper, insbesondere durch Extrusion, hergestellt werden, wobei verbleibenden Glasbestandteile als verstärkende Glasfasereinlagen der Polyolefin-Matrix dienen.

Nachfolgend werden die beim Aufbau eines Kabels verwendeten Bestandteile im einzelnen abgehandelt und dabei die im Hinblick auf die Realisierung der Erfindung zweckmäßigen Ausgestaltungen wiedergegeben:

### 1. Glasbestandteile

### 1.1 Lichtwellenleiter

Glasbestandteile der Lichtwellenleiter passen sich unmittelbar in die geforderte Zusammensetzung der sonstigen Bestandteile ein, da sie nur aus Glas bestehen. Da der Kabelhersteller im allgemeinen keinen Einfluß auf Art und Zusammensetzung der Schutzschichten (Coatings) auf den Lichtwellenleitern hat, müssen diese im allgemeinen hingenommen werden. Da diese Materialien derzeit im wesentlichen aus vernetzten Acrylharzen bestehen, stellen sie im eigentlichen Sinn keine Polyolefine dar. Andererseits ist jedoch zu berücksichtigen, daß bei einem optischen Kabel der Materialanteil dieser Beschichtungen praktisch vernachlässigbar ist und auf jeden Fall unterhalb 1 Gew.% des Kabels liegt. Derartige geringfügige "Verunreinigungen" der sonst nur aus Glas und Polyolefinen bestehenden sonstigen Bestandteile des Kabelaufbaus können deshalb hingenommen werden.

Sollte es in der Zukunft möglich sein, die Faserhersteller dazu zu veranlassen, Beschichtungen nicht aus Acrylharz zu verwenden, dann würden bevorzugt thermoplastische Materialien als Beschichtungsmaterialien bei den Lichtwellenleitern eingesetzt, welche die gewünschten Schutz- und Festigkeitseigenschaften für die eigentliche Lichtleitfaser bereitstellen und keinen störenden Anteil im Kabelaufbau aus Glas und Polyolefinen bedeuten.

Alle etwaigen sonstigen Bestandteile des Kabels, die nicht aus Glas oder Polyolefinen bestehen, sollten unter 1 Gew.%, vorzugsweise unter 1 Gew.% des Gesamtkabels gehalten werden, damit sie das Verhalten des beim Zerkleinern erhaltenen Granulats nicht beeinträchtigen.

### 1.2 Verstärkungen bzw. zugfeste Elemente

Im Mantel- oder auch im Bereich der Kabelseele können zusätzliche Verstärkungsfilamente eingelagert werden, die bei entsprechender Materialauswahl die Recyclbarkeit des erfindungsgemäßen Kabels nicht beeinträchtigen.

### 1.2.1 Zugfeste Elemente

Diese werden bei dem erfindungsgemäßen Kabel bevorzugt als (nicht optische) Glasfaserelemente ausgebildet, wobei im all gemeinen auch eine Einbettung in eine Kunststoffmatrix zweck mäßig sein kann. Die als Verstärkungselemente dienenden Glas fasern werden vorteilhaft in eine Matrix eingebettet, die au einem Polyolefin besteht, wobei hierfür insbesondere Polypro pylene geeignet sind.

Als solche Filamente können insbesondere feste Kunststoffe, wie z.B. Polycarbonate verwendet werden, sogenannte MFR ("melt filament reinforced"). Auch der Einsatz von LCP's ("liquid crystal polymer") ist im Rahmen der Erfindung möglich, um die Festigkeitseigenschaften des Kabels zu verbessern.

Eine bevorzugte Methode besteht darin, Verstärkungselemente aus der gleichen Materialfamilie zu verwenden, wie das Matrixmaterial, z.B. aus MDPE. Das bedeutet, daß das Hüllenmaterial, z.B. aus HD-PE besteht und die Verstärkungsfäden bestehen ebenfalls aus PE, aber aus einem PE-Typ, mit extrem hoher Dichte, z.B. Ultra-HD-PE.

In einem besonderen Werkzeug, bevorzugt in Form eines Querspritzkopfes können Fäden mit extrem gut längsorientierten Molekülketten erzeugt werden, die in das Adermaterial eingebettet werden (MFR-Fäden). Damit derartige Fäden besonders gute Kettenorientierung aufweisen und große Scherkräfte in den Fließkanälen realisiert werden können, ist es zweckmäßig die Fäden während der Einbettung in diese umgebende Matrix bei der Ausführung des Extrusionsvorganges in ausreichend niedrige Temperaturen zu bringen, um eine Reorientierung zu verhindern. Zu diesem Zweck werden die Fäden vorteilhaft aus sehr hochmolekularem Polyolefin hergestellt, das bei der Verarbeitungstemperatur des Matrixmaterials (zweckmäßig aus relativ niedermolekularem Polyolefin bestehend) gute Kettenorientierung ergibt.

Zur Unterstützung der Orientierung und ggf. zusätzlichen Verstärkung in Längsrichtung können vorteilhaft dem Verstärkungsmaterial diverse Zusatzstoffe beigefügt werden, z.B. Glasfaserschnitzel und/oder andere, vorzugsweise mineralische Füllstoffe mit Faden bzw. Stäbchenstrukturen. Auch spezielle LCP-Compounds, die bei niedrigen Temperaturen verarbeitet werden können, sind zur Verbesserung der Fließeigenschaften, zur Verbesserung der Orientierung und bei höherer Zugabe auch zur Verstärkung geeignet.

Eine weitere Variante der Eigenverstärkung kann dadurch erreicht werden, daß z.B. die innere Schicht einer rohrförmigen Umhüllung von der Füllmasse, die zur Abdichtung z.B. einer LWL-Hohlader in diese eingebracht wird, auf eine niedrige Temperatur gebracht wird, bei der das Material in Fließrichtung orientiert werden kann. Im weiteren Verlauf nach dem Verlassen der Ausformdüse wird das Material von der Füllmasse gekühlt bzw. kühl gehalten. In diesem Fall kann das orientierte Material an der inneren Schicht identisch oder ähnlich sein wie das nichtorientierte Material einer äußeren Hüllenschicht. Ein Beispiel hierzu ist in Figur 2 dargestellte. Als weitere Ausführungsbeispiele der Erfindung sind zu nennen: reine Polyolefinteile, z. B. Polyolefinröhrchen, vorzugsweise Polypropylen, optional zur Verstärkung hochgefüllt, z.B. mit Calciumcarbonat, Silikaten oder sonstigen anorganischen Füllstoffen.

Die Kabelmäntel bestehen ohnehin meist aus Polyolefinen, insbesondere Polyethylen-Materialien, wobei die Kabelmäntel ein- oder mehrschichtig ausgebildet sein können. Derartige Kabelmäntel enthalten meist Zusatzmaterialien, insbesondere Ruß und Stabilisatoren die eine vorzeitige Wärmeoxydation, Alterung sowie eine Schädigung durch Lichteinwirkung verhindern. Die meisten dieser Materialien stehen einer Weiterverarbeitung des aus dem erfindungsgemäßen Kabel gebildeten Gemisches z. B. in Form eines Granulates nicht im Wege und lassen sich z.B. wie die UV-Stabilisatoren und der zum Einfärben benutzte Ruß auch bei einem aus dem Granulat neu hergestellten Formstück ohne weiters tolerieren.

### 3. Weitere Kunststoff-Materialien innerhalb der Kabelseele

Innerhalb der Kabelseele können als weitere Bestandteile, z.B. noch vorgesehen sein, Schutzröhrchen für die Aufnahme eines oder mehrerer Lichtwellenleiter, zusätzliche Zwischenschichten oder Innenmantel, Wickelfolien, polsternde Schichten oder dergleichen. Auch diese festen Formteile werden bei der Erfindung im wesentlichen aus Polyolefinen hergestellt und der Gebrauchszweck des optischen Kabels läßt dies auch im allgemeinen zu.

### 4. Pastöse Füllmassen oder Füllschäume

Im allgemeinen werden die Lichtwellenleiter mit einer Füllmasse umgeben (z. B. "Aderfüllmassen"), um sie vor mechanischen Beanspruchungen und/oder chemischen Veränderungen, z. B. oxidativer Abbau des Fasercoatings, zu schützen, bzw. um die Längswasserdichtigkeit an den Kabelenden, bzw. bei Kabelbeschädigungen, zu gewährleisten. Dies gilt auch für Seelenfüllmassen.

### 4.1 Pastöse Füllmassen

Derartige pastöse Füllmassen enthalten im wesentlichen Öl, ein Verdickungsmittel sowie ggf. ein Thixotropierungsmittel, z. B. in Form von SiO₂. Als Thixotropierungsmittel im Rahmen der Erfindung können ohne Beeinträchtigung der Weiterverarbeitbarkeit des Granulats verwendet werden: hochdisperse Kieselsäure (Handelsnamen: "Aerosil", Fa. Degussa; "HDK", Fa. Wacker) sowie alle gängigen anorganischen Füllstoffe, wie Montorillonite, Zeolithe, Kreiden und Oxide der Erdalkalien, des Titans, Zink und Aluminiums, sofern sie in hochdisperser Verteilung vorliegen.

Auch organische Thixotropierungsmittel, sofern recycling-freundlich, können mit Gewinn eingesetzt werden, z. B. Rizinusöl-Derivate, Rilanit-Typen, sowie organisch modifizierte Bentonite und Hectorite und niedermolekulare Poly-α-Olefine.

Im Rahmen der Erfindung sind als organische Verdickungsmittel in der Füllmasse insbesondere leicht abbaubare und recyclbare Polyolefine vernetzt, wie unvernetzt, geeignet.

Ganz besonders gilt dies für PE-Wachse, verzweigte und unverzweigte Paraffine, Polypropylene, speziell APP, Polyisobutylen, z.B. Oppanol B3 / B 10 der BASF, sowie Polybutylene, Naptel-Typen, und EPM-/EPDM-Kautschuke.

Einen Sonderfall stellen Styrol-Butadien-Copolymere mit hervorragenden Verdickungseigenschaften dar. Im ureigentlichen Sinne sind sie keine Polyolefine, da aber halogenfrei und in Anteilen kleiner 10 % voll kompatibel und kogranulierbar mit Polyolefinen sind, sie im Rahmen der Erfindung als Verdikkungsmittel für Aderfüllmassen geeignet.

Im Rahmen der erfindungsgemäßen Anwendung soll der Ölanteil der Füllmasse, da beim späteren Recyclingprozeß u.U. störend, so gering wie möglich gehalten werden. Vorzugsweise ausreichend sind 3 - 30 Gew.%, bezogen auf den Gesamtfüllmassenanteil.

Für die Anwendung geeignet sind zwei unterschiedliche Möglichkeiten des Ölzusatzes.
Zum einen die Verwendung eines bei Raumtemperatur niederviskosen, vorzugsweise 0,1-50 mPas, niedrigsiedenden synthetischen, bzw. naphthenischen weitestgehend aromatenfreien Öls.

Bei Wiederverwertung des Kabels ist zwischen Zerkleinern und Regranulieren eine Vakuumstufe, bzw. ein Wirbelbett mit hoher Luftzirkulation vorzuschalten, bei dem, vorzugsweise bei erhöhter Temperatur (60 - 150 °C) die flüchtigen Öle entfernt und nach Kondensation und Filtration als Füllmassenbestandteile wiederverwertet werden können.

Technisch machbar, jedoch aufwendiger ist eine Gefriertrocknung mit vorgeschalteter Tieftemperatur-Zermahlung des Kabels.

Eine andere, allerdings etwas weniger umweltfreundliche Abtrennung des Öls, ist die Extraktion der Kabelbestandteile mit harmlosem Kaltreiniger, meist höhere Ester bzw. niedrigsiedende Paraffine, mit anschließender Trocknung vor der Granulierung.

Zum anderen werden bewußt, im Rahmen der Erfindung, hochsiedende und höhermolekulare Öle, sog. Prozeßöle, verwendet, die nur zum Anteigen der Polyolefinbestandteile dienen, um eine im Servicetemperaturbereich des Kabels noch weiche, pastöse Konsistenz zu ermöglichen und eine leichte Verarbeitbarkeit der Füllmasse bei der Kabelherstellung zu gewährleisten.

Dieser hochmolekulare Restölanteil des Kabels kann, da polymerverträglich, bei der Wiederverwertung des Kabels im Granulat verbleiben. Dabei fungiert das Öl als Weichmacher und verbessert die Endeigenschaften des Recyclingmaterials, wie Härte und Dehnung ganz erheblich.

Eine besonders geeignete pastöse Füllmasse kann z. B. zu 80 bis 90 Gew.% aus einem Polyolefin mit niedriger Erweichungstemperatur, wie z. B. einem PE-Wachs, einem EVA-Copolymer, einem hochmolekularen Polyisobutylen (Oppanol B3/B10) sowie z. B. ataktischen Polypropylenen (APP) bestehen. Diesem Material können zum zusätzlichen Weichmachen und zum Absenken des Erweichungsbereiches 10 bis 20 Gew.% eines vorzugsweise aromatenarmen, hochsiedenden Mineralöls bzw. Petrolates zugesetzt werden.

Besonders geeignet, da gute Tieftemperaturfluidität versprechend, sind hochmolekulare verzweigte synthetische Öle, z.B. Polyalphaolefine, PAO's.

Charakteristisch für diese Füllmassen ist ihre gute Verarbeitbarkeit im Temperaturbereich von 100 bis 160°C und ihr weiches, pastöses Eigenschaftsbild im Temperaturbereich von-40 bis +70°C, bei einer gleichzeitigen ausreichenden Auslaufsicherheit bei erhöhter Temperatur (80 - 100°C). Durch den geringen Ölzusatz wird die Recyclingfähigkeit, wie oben näher beschrieben, nicht verschlechtert. Die Verträglichkeit mit den anderen Kabelbestandteilen ist gewährleistet.

Durch den geringen Ölzusatz ist praktisch kein Ausölen der Füllmasse bei erhöhter Temperatur festzustellen.

### 4.2 Verschäumte Füllmassen

Besonders vorteilhaft können als Füllmassen solche aus verschäumten Polyolefinen verwendet werden. Derartige verschäumte Polyolefine lassen sich nach bekannten Verfahren relativ preiswert herstellen, sie bieten einen ausreichenden Schutz für die Lichtwellenleiter und sie gewährleisten auch bei entsprechender Herstellung bzw. Zusammensetzung die notwendige Längswasserdichtigkeit.

Eine erfindungsgemäß geeignete Kabelfüllmasse ist in der DE 30 18 141 C2 ( Anmelder Siemens) beschrieben.

Für verschäumte oder verzellte Füllmassen sind besonders folgende Festlegungen zweckmäßig:

Der Verzellungsgrad sollte vorteilhaft über 50% erreichen, vorzugsweise über 90 % liegen. Der mittlere Porendurchmesser wird zweckmäßig zwischen 0,1 bis 1 mm gewählt, wobei unter Porendurchmesser der Durchmesser des Luft- oder Gaseinschlusses innerhalb der verschäumten Polyolefinmasse verstanden wird. Als Ausgangsmaterial für die Herstellung der zu verschäumenden Masse werden vorteilhaft reine Polyolefine oder Ethylen-Propylen-Copolymerkautschuke (EPM), Ethylen-Propylen-nichtkonjugierte Dien-Kautschuke (EPDM) im vernetzten, wie unvernetzten Zustand, ataktisches Polypropylen (APP), oder Ethylen-Vinylacetat-Copolymere (EVA's), verwendet.

Die jeweiligen Poren sollten geschlossen sein, was durch eine entsprechende Steuerung des Zellwachstums, durch die Auswahl der günstigsten Materialien und entsprechender Zusätze erfolgen kann. Als Keimbildner können insbesondere Kieselsäuren (HDK, Aerosil) sowie Talkum und Rutil (Titandioxid) verwendet werden.

Der Zusatz geringster Mengen (kleiner 0,1 %) von oberflächenaktiven Substanzen, z.B. Silikonölen, ist für Steuerung der Schaumbildung und Stabilisierung der Blasen sinnvoll. Während Granulierung der Kabelbestandteile verbleiben diese harmlosen Additive im Recyclingmaterial. Der Zusatz dieser Stoffe ist jedoch im Rahmen der Erfindung nicht zwingend erforderlich.

Für eine optimale Verzellung, insbesondere bei der Verwendung von PE als Ausgangsmaterial, stellt die ausreichende Zähigkeit der Schmelze während des Zellwachstums einen wichtigen Gesichtspunkt dar, um ein Kollabieren der Zellen zu verhindern. Dies kann z. B. dadurch erreicht werden, daß unvulkanisierte Ethylen-Propylen-Copolymer-Kautschuke mit hoher Schmelzeviskosität, gleich niedrigem Melt Flow Index (MFI) nach ASTM D-1238 im Bereich von 0,2 - 20 g/10 min, vorzugsweise 0,5 - 2 g/10 min und einem Molekulargewicht von > 100 000 verwendet werden. Bei diesen Materialien ist eine gewisse Anvernetzung während der Verzellung vorteilhaft.

Dabei ist Elektronenstrahlvernetzung weniger geeignet, da eventuell eine Schädigung des Lichtwellenleiters eintritt. Durch Zusatz von vinylsubstituierten Polymeren bzw. EPDM ("Ethylen-Propylen-nichtkonjugierte Dien-Kautschuke") zum Standardpolyethylen wird unter Einfluß von Peroxyden zweckmäßig geringfügig während der Extrusion radikalisch vernetzt, was eine ausreichende Schmelzestabilität zur Folge hat.

Als Herstellungsverfahren für derartige Thermoplastschäume eignet sich vorzugsweise die Thermoplast-Schaum-Extrusion, bei der durch einen vorgeschalteten Prozeß, z. B. in Form einer Tandemextrusion, die Herstellung erfolgt und der so stabilisierte Polyolefin-Schaum mittels einer Füllnadel inline während der Extrusion der anderen Kabelbestandteile, wie z. B. Zentralelement, Mantel usw. in die Kabelseele bzw. in eine Schutzhülle für die Lichtwellenleiter eingefahren wird. Derartige Füllverfahren mit Füllnadeln sind bereits bisher bei der Einbringung z. B. von pastösen Füllmassen bekannt und können auch hier für die Einführung von Polyolefinschäumen analog angewendet werden. Der Schaum selbst wird durch anschließendes Abkühlen eingefroren, wobei für die Einbringung des Schaums Temperaturen zwischen 100°C und 180°C zweckmäßig sind. Um eine dimensionsstabile Außenhülle sicherzustellen, kann gegebenenfalls im Kühlbecken eine sogenannte Außenkalibrierung eingebracht werden.

Die für die Verzellung notwendigen Zusatzstoffe, sogenannte Kicker, sollten, soweit sie selbst keine Polyolefine darstellen, zweckmäßig aus folgenden Materialien bestehen:
Talkum, Kreiden und sonstige gängige anorganische Füllstoffe.

Chemische Verschäumungsmittel werden üblicherweise anteilig von 0,5 - 5 Gew.% zur verschäumenden Matrix zugegeben. Erfindungsgemäß sind 0,3 - 2 Gew.% voll ausreichend, um den gewünschten Verschäumungsgrad zu erhalten. Ein Teil des Verschäumungsmittels wird bei der Kabelherstellung in Gas umgewandelt, muß also nicht mehr recycliert werden. Der verbleibende anorganische Teil verbleibt als inerter Füllstoff im Recyclat und muß nicht entfernt werden.

Bei der chemischen Verschäumung kann vorteilhaft durch Zusatz leicht flüssiger Kohlenwasserstoffe (insbesondere Pentan, Butan, Propan, Cyclohexan) in kleinen Mengen von 1 bis 5 Gew.% des Basispolymers, die als Treibmittel wirken, eine notwendige oder gewünschte Verzellung erreicht werden. Ein anderes gängiges Verfahren ist der Zusatz chemischer Treibmittel, wie Azodicarbonamid, Hydrazide, Natriumhydrogencarbonat und Zitronensäure im etwa gleichen Mengenverhältnis von 1 - 5 Gew.% des Basispolymers (s. o.). Bei Erwärmung spalten diese Stoffe inerte Gase, wie z. B. Stickstoff oder Kohlendioxid ab, welche die Verzellung bewirken. Hierbei ist zweckmäßig auf eine entsprechend exakte Temperaturkontrolle und Regelung des Abspaltungsprozesses zu achten.

Ein anderes, im Rahmen der Erfindung einsetzbares, modernes Verschäumungsverfahren ist die physikalische Verzellung durch Entspannung komprimierter Gase in der Thermoplastschmelze und Einfrieren dieses Zustands durch Abkühlung der Matrix.

Als Gase werden beispielsweise Stickstoff, Kohlendioxid bzw. Argon unter hohem Druck über eine Dosiereinrichtung in die Schmelze eingepreßt. Beim Austragen aus dem Extruder erfolgt Entspannung zu Gasbläschen an den eingebrachten Keimbildner, wie Talkum, HDK oder Kreide (s.o.). Dieses Verfahren erfordert exakte Drucküberwachung und Regelung. Die Verwendung eines Vakuumwerkzeugs und/oder eine Kalibrierung des Thermoplastschmelzeschlauchs ist von Vorteil.

Im Rahmen der Erfindung können besonders verschäumte Kautschuke auf Polyolefinbasis vorteilhaft als geschäumter Füllmassenersatz verwendet werden. Dabei werden zweckmäßig solche Elastomertypen eingesetzt, die unvernetzt bzw. nur anvernetzt sind, um beim Recycling ein Aufschmelzen und eine Blendbildung mit anderen Kabelbestandteilen (z. B. einem Zentralelement oder dem Mantel) sicherzustellen. Als geeignete Materialien für die Herstellung verschäumter Kautschuke sind zu nennen: vernetzte und unvernetzte Ethylen-Propylen-Copolymerkautschuke (EPM), Ethylen-Propylen-nichtkonjugierte Dien-Kautschuke(EPDM), weiche PE- und PP-Typen, ataktisches Polypropylen (APP), Ethyl-Vinylacetat-Copolymere (EVA) und Polybutadien-Copolymere, Polyisopren und PIB im Molekulargewichtsbereich von 50 - 200 000 sowie "single site"-Elastomere und isotaktisches PP. Verzellung und generelle Eigenschaften dieser Materialien sind anlog zu denen reiner, unvernetzter Polyolefine.

Thermoplastische Elastomere auf Polyolefinbasis können erfindungsgemäß mit großem Vorteil verwendet werden. Diese sind im allgemeinen Block-, Pfropf- und segmentierte Copolymere, die aus zwei untereinander unverträglichen Domänen aufgebaut sind. Das Eigenschaftsprofil ergibt sich aus dem hart/weich-Charakter oder der kristallinen/amorphen Segmentierung. Typische Beispiele sind Butadien-Copolymere, EPDM-PP-Verschnitte sowie EVA-Copolymere. Nähere technische Details sind in der DE 30 18 141 C2 beschrieben.

Der Hauptbestandteil bzw. das Matrixmaterial der Füllmassen sollte zweckmäßig zumindest zu 90 Vol.% aus thermoplastischem Material bestehen, das beim Recycling des Kabels ohne Trenn- und Reinigungsvorgänge zusammen mit den anderen Kabelbestandteilen unmittelbar aufgeschmolzen und weiterverarbeitet werden kann. Die Weiterverarbeitung ist dabei als Homopolymer bzw. als Blend für einfache Artikel aus Kunststoff möglich für die die verbleibenden Glasfaseranteile vorteilhaft als Verstärkungseinlagen dienen. Weitere Füll- und Hilfsstoffe können mit maximal 10 Vol.% der Füllmasse ggf. beigefügt werden, um die Rheologie zu verbessern, z. B. Thixotropierungsmittel, Verdicker (s.o.). Sie sind ausreichend umweltverträglich und inert und können in Recyclaten verbleiben. Beim Aufschmelzen werden keine Gefahrstoffe abgegeben, wenn folgende Füll- und Hilfsstoffe verwendet werden:
Hochdisperse Kieselsäuren (HDK, Aerosil), Montmorillonite, Bentonite, Rutil, Kreiden u. ä.

Als Hauptbestandteile der Füllmasse bei verschäumten Polyolefinen werden vorteilhaft verwendet:
vorzugsweise Polypropylen, seitengruppenmodifizierte Polypropylene, LDPE, modifiziertes PE, VPE sowie Blends mit EPDM.

Um als kräfteabsorbierendes Medium für den Lichtwellenleiter zu fungieren ist extreme Weichheit und Elastizität der Füllmasse gefordert, d. h. insbesondere ein E-Modul im Bereich von 1 bis 10 MPa im gesamten Einsatztemperaturbereich von-40°C bis +70°C, Mindestreißdehnungen von 10 - 40 % und Shore-Härte A < 10. Die Dichten nach Verschäumung liegen zweckmäßig bei 0,01 - 0,1 g/ml. Die Zugfestigkeiten der Schäume liegen vorteilhaft bei 0,1 bis 1 MPa.

### 5. Herstellungsverfahren für ein erfindungsgemäßes Kabel

Für das erfindungsgemäße Kabel werden vorteilhaft besondere Herstellungsverfahren angewandt, die nachfolgend näher beschrieben werden.

### 5.1 Füllmassen mit Kügelchen

Zur Füllung der Hohlräume zwischen Fasern und Aderhülle können vorteilhaft auch Kügelchen verwendet werden. Diese Kügelchen können aus Glas bestehen, vorzugsweise werden aus Kunststoffen, insbesondere aus Polyolefinmassen bestehende Kügelchen verwendet (vgl. z.B. EP-0 375 685 B1 oder EP-0 580 274 A1). Diese Kügelchen werden vorteilhaft extrem hoch expandiert, wobei ein "Verschäumungsgrad" der die Kügelchen enthaltenden Füllmasse von mindestens etwa 95 % zweckmäßig ist. Das Einschleppen bzw. Einführen der Kügelchen kann vorteilhaft dadurch erfolgen, daß die Lichtwellenleiter elektrostatisch aufgeladen werden und auf diese Weise die Hohlkügelchen anziehen. Über die Stärke der elektrostatischen Aufladung kann in einfacher Weise die Menge der mitgeschleppten Kügelchen gesteuert werden. Die Hohlräume zwischen den Kügelchen können vorteilhaft durch Zugabe einer sehr geringen Menge von Quellmittel verschlossen werden, wobei besonders solche Quellmittel zweckmäßig sind, die bei Wasserzutritt eine starke Volumenvergrößerung ergeben. Hierbei wirkt die Füllung aus Hohlkügelchen als Stützgitter für das Quellmittel ( z.B. Quellpulver).

Die Kügelchen können auch unexpandiert oder teilexpandiert in eine Umhüllung, z.B. in eine Hohlader eingeführt werden und erst dort in der Hohlader auf ihre endgültige Größe expandiert werden. Die Expansion dieser Kügelchen kann vorteilhaft dadurch erfolgen, daß die Kügelchen durch die Erwärmung im extrudierten, aber noch nicht vollständig abgekühlten Rohr der Hohlader auf die gewünschte Expansionstemperatur gebracht werden. Dies kann dadurch erfolgen, daß die Extrusion des Kunststoffrohres von Haus aus mit einer so hohen Temperatur durchgeführt wird, daß es zu einer Expandierung oder Restexpandierung der Hohlkügelchen kommt. Es ist aber auch möglich, im Rahmen des Extrusionsprozesses ein zusätzliche Nach-Erwärmung zwecks Expandierung oder Restexpandierung vorzusehen.

Eine andere Expansionsmethode kann darin bestehen, daß die expandierbaren Kügelchen in eine auch als Füllmasse dienende Trägersubstanz bestehend aus einer Trägersubstanz geeigneter Viskosität wie z.B. Poly-α-Olefine, Weißöle u.ä. eingemischt werden. Die noch nicht expandierten Hohlkügelchen können auch durch Mikrowellenerwärmung expandiert werden. Zu diesem Zweck werden die Hohlkügelchen aus einem Material hergestellt das einen höheren dielektrischen Verlustfaktor aufweist als das Hohladermaterial. In dieser Füllmasse werden die Kügelchen unter Druck aufgeheizt, und in die Umhüllung, z.B. eine Hohlader transportiert. Die transportierte Menge an Füllmasse und Kügelchen wird so dosiert, daß die Kügelchen in der Hohlader expandieren können und so zusammen mit den ebenfalls eingeführten Lichtwellenleitern den Innenraum der Hohlader ausfüllen. Diese Methode erlaubt es, die Kügelchen mit Dosierpumpen in eine Hohlader zu befördern, die im expandierten Zustand wegen ihrer Druckempfindlichkeit und der dadurch bedingten Zerstörungsgefahr auch in einer Trägersubstanz (Füllmasse) nicht ohne weiteres gepumpt werden könnten.

Die Erfindung und ihre Weiterbildungen werden anhand von Zeichnungen näher erläutert.

Es zeigen:
- Fig. 1: im Querschnitt den Aufbau eines gemäß der Erfindung gestalteten Kabels,
- Fig. 2: eine Einrichtung zur Herstellung eines besonders zugfesten, orientierten Hüllenmaterials,
- Fig. 3: im Querschnitt den Aufbau eines Kabels ohne Füllmittel,
- Fig. 4: den Aufbau eines Kabels im Querschnitt mit verschäumten Zwickel räumen,
- Fig. 5: im Querschnitt ein optisches Kabel nach der Erfindung mit hohlem Innenraum und
- Fig. 6: in schematischer Darstellung eine Anlage zum Recyclen eines erfindungsgemäßen Kabels

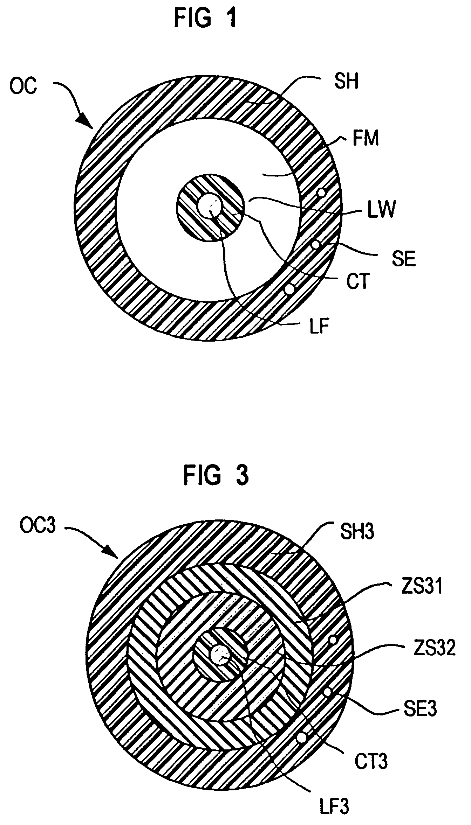

In Figur 1 ist ein optisches Kabel OC mit einem ein- oder mehrschichtigen Außenmantel SH versehen, in dem zugfeste Elemente SE eingelegt sind. Anstelle oder zusätzlich zu einzelnen zugfesten Elemente SE können auch, insbesondere bei einer mehrschichtigen Außenmantel, eine oder mehrere Mantelschichten vorgesehen sein, die für sich aus hochzugfesten, z.B. gerecktem Material bestehen. Im Inneren des Außenmantels SH ist eine Füllmasse FM vorgesehen, die aus verschäumten oder aus pastösen Material hergestellt sein kann. Insbesondere bei Verwendung von pastösen Massen ist auch die Einbettung einzelner Hohlkügelchen möglich. Im vorliegenden Beispiel ist angenommen, daß in dem Außenmantel SH nur ein einziger Lichtwellenleiter LW angeordnet ist, der aus der eigentlichen aus Glas bestehenden Lichtleitfaser LF und einer außen aufgebrachten Schutzschicht (Coating) CT besteht. Natürlich ist es auch möglich, in die Füllmasse FM mehrere Lichtwellenleiter LW einzubetten, bzw. eine andere Art von Lichtwellenleitern vorzusehen, z.B. in Form von Lichtwellenleiteradern, insbesondere Hohladern ("loose tube") oder Festadern ("tight buffer"). Im Rahmen der Erfindung ist vorgesehen, daß der gesamte Kabelaufbau - abgesehen von kleineren Prozentanteilen an Zusatzstoffen - im wesentlichen nur aus Glas (z.B. Lichtleitfaser LF und ggf. Verstärkungselemente SE) besteht, bzw. die übrigen Bestandteile im wesentlichen aus Polyolefinen hergestellt sind. Hierzu zählen insbesondere die Schutzhülle SH und die Füllmasse FM. Insgesamt sollten die nicht aus Glas bzw. Polyolefinen bestehenden Anteile am Gesamtgewicht des optischen Kabels OC unter 1% vorzugsweise unter 1 °% liegen.

In Figur 2 ist ein Extrusionswerkzeug EX im Querschnitt dargestellt, bei dem eine Schicht der Außenhülle SH nach Figur 1 aus einer speziell vorgereckten Schicht hergestellt wird. Ein oder mehrere Lichtwellenleitern LW werden in eine Füllnadel oder Füllkammer FN eingeführt, die in einer Bohrung BO des Extruderkopfes EX eingesetzt ist. Als zweischichtige Umhüllung werden ein äußeres Hüllenmaterial AH und ein gekühltes orientiertes inneres Hüllenmaterial IH durch Koextrusion aus dem Extruderkopf EX herausgepreßt. Die Füllmasse FM ist in einem Führungsrohr FR geführt und zwar unter Druck und expandiert nach dem Verlassen des Führungsrohres FR. Dabei schlägt die Füllmasse bis an den Rand des Mundstücks M1 an, welches der Führung des gekühlten orientierten (gereckten) Innenmaterials IM dient. Die Füllmasse FM, die auf niedriger Temperatur gehalten wird, vorzugsweise zwischen 80 und 120°C bewirkt eine Kühlung des ohnehin auf niedriger Temperatur (vorzugsweise zwischen 120 und 180°C) gehaltenen, gekühlten Materials IH der Innenschicht. Das Außenmaterial AH ist zwischen den ringförmigen Mundstücken M2 und M3 mit einer geringfügig höheren Temperatur geführt, vorzugsweise zwischen 130 und 220°C), wobei dieses Außenmaterial beim Zusammentreffen mit dem Material der Innenhülle IH soweit abgekühlt ist, daß es zu keiner Reorientierung des gereckten und damit zugfesten Materials IH kommt. Um ein optisches Kabel OC nach Fig. 1 zu erhalten, sind die zugfesten Elemente SH (in hier nicht dargestellter Weise zusammen mit einer der Materialschichten AH oder IH durch das Extrusionswerkzeug zu führen.

Es kann zweckmäßig sein, einen Spalt SP vorzusehen, um zusätzlich einen Wärmeübergang von Innen auf das Mundstück M1 für das innere Hüllenmaterial IH zu vermeiden. Schließlich ist es auch möglich, in diesen Spalt zusätzlich eine Kühlung, z.B. in Form einer Luftkühlung oder dergleichen vorzusehen, wobei durch eine Ringdichtung DI der Kühlmittelstrom von der Füllmasse FM weggehalten wird.

In Figur 3 ist ein optisches Kabel OC3 dargestellt, dessen Aufbau dem einer Kompaktader (Festader) sehr ähnlich ist. Außen ist eine Schutzhülle SH3 vorgesehen, die ggf. Verstärkungseinlagen insbesondere in Form von Glasfasern oder dergleichen enthalten kann, die sich ohne weiteres recyclen lassen. Darauf folgen eine oder mehrere Zwischenschichten, bis schließlich im Inneren die eigentlichen aus Kern- und Mantelglas bestehende Lichtleitfaser LF3 erscheint, auf der außen eine Schutzschicht (Coating) CT3 angebracht ist. Im vorliegenden Beispiel sind zwei Zwischenschichten ZS31 und ZS32 vorgesehen, wobei die äußere Zwischenschicht ZS31 bevorzugt aus einem weichen Polyolefinmaterial besteht, während die innere Schicht ZS32 als Trennmittelschicht ausgebildet ist und bevorzugt aus Teflonpuder besteht. Das so aufgebaute Kabel enthält nur Materialanteile in Form von Glas und - wenn man vom Coating CT3 und der ggf. vorhandenen hauchdünnen Teflon-Puder-Schicht absieht - ohne weiteres recyclbare Kunststoffe in Form von Polyolefinen.

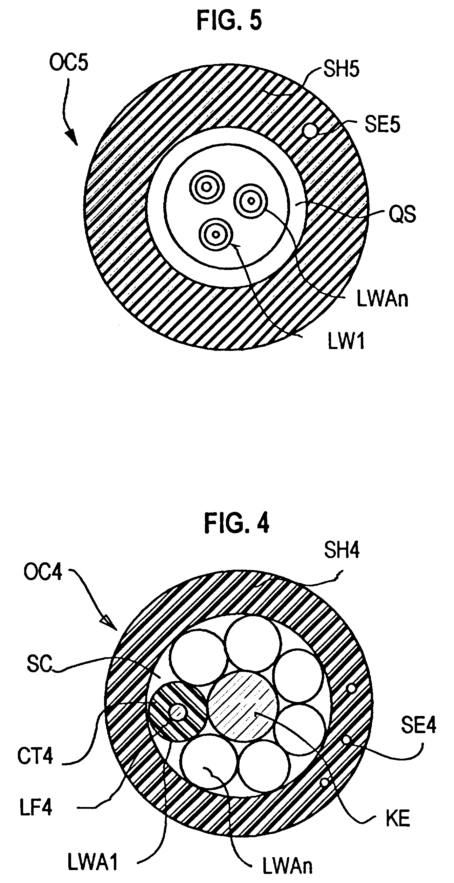

In Figur 4 ist ein optisches Kabel OC4 dargestellt, das außen eine Schutzhülle SH4 aus Polyolefinmaterial (ggf. mit Verstärkungsfasern aus Glas versehen) aufweist. Im Inneren ist im Zentrum ein Kernelement KE vorgesehen, das aus zugfestem Material besteht, insbesondere aus in eine Polyolefinmatrix eingebetteten Glasfasern. Auf dieses Kernelement KE ist mindestens ein Lage von n-Lichtwellenleiteradern LWA1 bis LWAn aufgeseilt, die als Kompaktadern ausgebildet sind, d.h. jeweils eine aus Glas bestehende Lichtleitfaser LF4 sowie eine darauf angebrachte Schutzschicht (Coating CT4) aufweisen. Die Zwickelräume können mit einem Schaumstoffmaterial SC gefüllt sein, das ebenfalls aus Polyolefinmaterial hergestellt wird. Das so erhaltene Kabel OC4 ist somit ebenfalls leicht recyclbar, da es nur - abgesehen vom Fasercoating CT4 - aus Polyolefinmaterial sowie Glas besteht.

In Figur 5 ist ein optisches Kabel OC5 dargestellt, dessen Außenmantel SH5 aus Polyolefinmaterial ggf. mit eingelagerten Verstärkungselementen SE5 aus Glas oder Polyolefinmaterial besteht. Drunter ist eine Quellschicht QS vorgesehen, die aus einem bei Feuchtigkeitszutritt das Volumen stark vergrößerndem Material besteht, das die Längsdichtigkeit des Kabels sichert. Die einzelnen Lichtwellenleiteradern LWA1 bis LWAn sind als Festadern analog Figur 4 aufgebaut und lose im Luftraum angeordnet, der im Inneren der Schicht QS aus Quellmaterial verbleibt. Auch dieses Kabel besteht somit - abgesehen von eventuell anders zusammengesetzten Fasercoating - nur aus Glas sowie Polyolefinmaterial. Als Quellmaterial für die Quellschicht QS kommen bevorzugt in Frage: Quellvliese oder - garne oder dergleichen, die neben ihrem Trägermaterial Absorbend - Polymere enthalten. Geeignet sind z.B. "Cemitec"-Typen (SSW25, STXN, SSS1) von Fa. Geca, oder Quellpulver wie z.B. "Sanwet" (Fa. Höchst), "Cabloc"-, "Favor"- oder Dynarsorb"-Typen (Fa. Stockhausen).

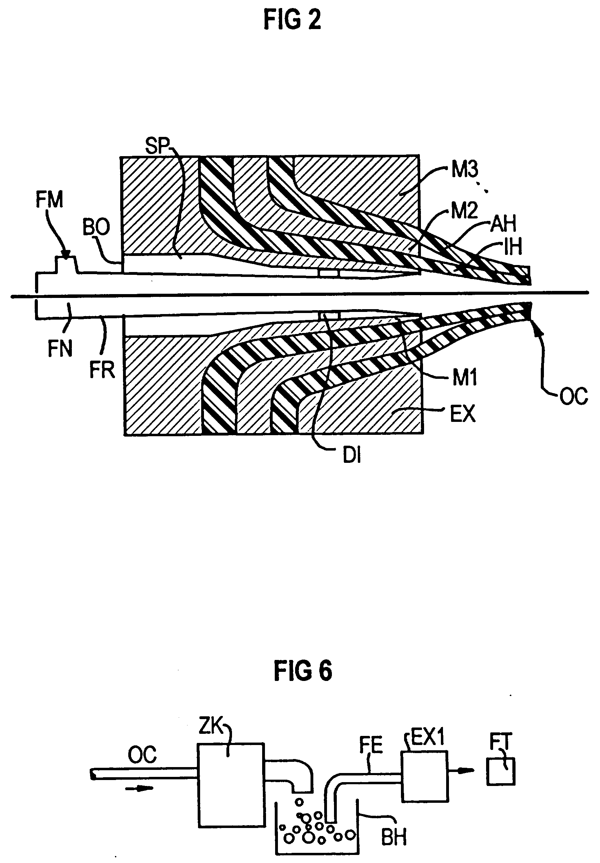

In Figur 6 ist dargestellt, wie ein optisches Kabel gemäß der Erfindung wieder aufbereitet wird. Das optische Kabel OC wird einer Zerkleinerungsanlage ZK zugeführt, d.h. das optische Kabel OC wird entsprechend kleine Stücke zerschnitten. Eine Trennung in unterscheidbare Einzelkomponenten oder Materialien findet dabei normalerweise nicht statt. Die so erhaltenen, jeweils den Gesamtinhalt des optischen Kabels OC wiedergebenden Teilchen werden als Gemisch z.B. in Form eines Schüttgutes ( z.B. als Granulat) in einen Behälter BH eingegeben. Dieses Schüttgut kann (nicht dargestellt) in entsprechende sonstige Behältnisse abgepackt und zu einem anderen Verwendungsort transportiert werden. Im vorliegenden Beispiel ist der Einfachheit halber davon ausgegangen, daß das aus Einzelteilchen bestehende Gemisch aus dem Behälter BH direkt verarbeitet wird und durch eine entsprechende Fördereinrichtung FE zu einem Extruder EX1 gelangt. In diesem Extruder EX1 wird aus dem alle Komponenten des ursprünglichen Kabels OC enthaltenden Gemisch ein neues Formteil FT gebildet, wobei die Glasfasern und ggf. vorhandene Verstärkungselemente beim optischen Kabel OC auch als faserförmiges Verstärkungsmaterial in das Formteil FT mit eingehen.

## Patentansprüche

1. Optisches Kabel (OC) mit mindestens einem eine Beschichtung (Coating) aufweisenden Lichtwellenleiter (LW) sowie son stigen Bestandteilen in Form einer Schutzhülle aus Kunststoffmaterial sowie ggf. zugfesten Elementen (SE) und/oder einer Füllmasse (FM),
**dadurch gekennzeichnet**,
daß sämtliche sonstigen Bestandteile des Kabels nur aus Polyolefinen und ggf. Glas und/oder anorganischen Füllstoffe oder bestehen.

2. Optisches Kabel nach Anspruch 1,
**dadurch gekennzeichnet**,
daß die sonstigen Bestandteile des Kabels über 98 Gew.%, vor zugsweise über 99,5 Gew.% des optischen Kabels ausmachen.

3. Optisches Kabel nach einem der vorhergehenden Ansprüche,
**dadurch gekennzeichnet**,
daß lediglich die Beschichtung (Coating) des Lichtwellenleiters (LW) nicht aus einem Polyolefin besteht.

4. Optisches Kabel nach einem der vorhergehenden Ansprüche,
**dadurch gekennzeichnet**,
daß zugfeste Elemente (SE) aus Glasfasern bestehen und/oder solche enthalten.

5. Optisches Kabel nach einem der vorhergehenden Ansprüche,
**dadurch gekennzeichnet**,
daß die zugfesten Elemente (SE) aus hochzugfesten Polyolefinen, insbesondere LCP oder hochgereckte "PP bzw. PP-Filamente", bestehen.

6. Optisches Kabel nach einem der vorhergehenden Ansprüche,
**dadurch gekennzeichnet**,
daß als die Längsschichtigkeit des Kabels ergebende Füllmassen solche verwendet werden, die aus einem Polyolefin, insbesondere mit niedriger Erweichungstemperatur bestehen.

7. Optisches Kabel nach Anspruch 6,
**dadurch gekennzeichnet**,
daß die Füllmassen wahlweise weiche PE, PP-Typen und Copolymere, PE-Wachse, EPVA-Copolymere, vernetztes, unvernetztes EPM, EPDM, hochmolekulares Polyisobutylen, Butadien-Copolymere bzw. ataktisches Polypropylen enthalten.

8. Optisches Kabel nach Anspruch 7,
**dadurch gekennzeichnet**,
thermoplastische Elastomere auf Polyolefin-Basis verwendet werden, die sich aus Copolymeren bzw. Verschnitten, der im Anspruch 6 genannten Materialien zusammensetzen.

9. Optisches Kabel nach einem der Ansprüche 6 bis 8,
**dadurch gekennzeichnet**,
daß der Anteil an Polyolefinen mit niedriger Erweichungstemperatur im Bereich zwischen 70 und 95 Gew.%, vorzugsweise im Bereich zwischen 80 und 90 Gew.%, der Füllmasse gewählt ist.

10. Optisches Kabel nach einem der Ansprüche 6 bis 9,
**dadurch gekennzeichnet**,
daß ergänzend zu den Polyolefinen Mineralöl bzw. Petrolate, Prozeßöle und/oder synthetische, verzweigte Öle, PAO's oder dergleichen zugesetzt ist bzw. sind.

11. Optisches Kabel nach Anspruch 10,
**dadurch gekennzeichnet**,
daß der Zusatz im Bereich zwischen 30 und 5 Gew.% , vorzugsweise zwischen 10 und 20 Gew.% der Füllmasse gewählt ist.

12. Optisches Kabel nach einem der vorhergehenden Ansprüche,
**dadurch gekennzeichnet**,
daß im Bereich der Kabelseele oder als LWL-Aderfüllmasse Polyolefine in verschäumter oder pastöser Form vorgesehen sind.

13. Optisches Kabel nach Anspruch 12,
**dadurch gekennzeichnet**,
daß der Verzellungsgrad bei verschäumten Polyolefinen größer als 50 % gewählt ist, vorzugsweise mindestens 90 % beträgt.

14. Optisches Kabel nach Anspruch 12 oder 13,
**dadurch gekennzeichnet**,
daß der mittlere Porendurchmesser bei der Verzellung zwischen 0,01 und 0,1 mm gewählt ist, vorzugsweise 0,1 bis 0,5 mm.

15. Optisches Kabel nach einem der Ansprüche 12 bis 14,
**dadurch gekennzeichnet**,
daß die geschäumten Polyolefine mit einer geschlossenzelligen Morpholgie ausgestattet sind.

16. Optisches Kabel nach einem der Ansprüche 12 bis 15,
**dadurch gekennzeichnet**,
daß modifizierte Polyolefine mit hoher Schmelzviskosität für die Verzellung vorgesehen sind.

17. Optisches Kabel nach einem der Ansprüche 12 bis 16,
**dadurch gekennzeichnet**,
daß bei den verzellten Polyolefinen eine Anvernetzung vorgesehen ist.

18. Verfahren zur Herstellung eines Kabels nach einem der Ansprüche 12 bis 17,
**dadurch gekennzeichnet**,
daß Polyolefinschaum mittels einer Füllnadel während der Extrusion der anderen Kabelbestandteile ins Kabelinnere eingefahren wird und daß durch anschließendes Abkühlen der Polyolefinschaum in diesem Zustand eingefroren wird.

19. Verfahren zur Wiederaufbereitung eines optischen Kabels nach einem der vorhergehenden Ansprüche,
**dadurch gekennzeichnet**,
daß das in seinen sonstigen Bestandteilen nur aus Polyolefinen und ggf. Glas oder anorganischen Füllstoffen bestehende Kabel durch einen Zerkleinerungsvorgang in ein Gemisch verwandelt wird, und daß aus diesem Gemisch neue Kunststoffformkörper, insbesondere durch Extrusion, hergestellt werden, wobei verbleibenden Glasbestandteile und anorganische Füllstoffe als verstärkende Glasfasereinlagen bzw. Füllstoffe der Polyolefin-Matrix dienen.

20. Verfahren nach Anspruch 19,
**dadurch gekennzeichnet**,
daß das Gemisch in die Form eines Granulates gebracht wird.
